# EUROPÄISCHE PATENTANMELDUNG

(11) **EP 1 237 387 A1**
(43) Veröffentlichungstag der Anmeldung: **04.09.2002**
(21) Anmeldenummer: 01104898.0
(22) Anmeldetag: 28.02.2001
(51) Int. Cl.: H04Q 7/38

(54) **Verfahren und Kommunikationsvorrichtung zum Übertragen einer Datenmenge bei begrenzt möglicher Übertragungsdauer in einem Funk-Kommunikationssystem**

(71) Anmelder: SIEMENS AKTIENGESELLSCHAFT, 80333 München (DE)
(72) Erfinder: Eichinger, Josef, 85464 Neufinsing (DE); Halfmann, Ruediger, 81359 Pullach (DE); Schulz, Egon, Dr., 80993 München (DE); Zirwas, Wolfgang, 82194 Groebenzell (DE)

(57) **Zusammenfassung**

Verfahren und Kommunikationsvorrichtung zum Übertragen einer Datenmenge bei begrenzt möglicher Übertragungsdauer in einem Funk-Kommunikationssystem
Die Erfindung bezieht sich auf ein Verfahren zum Übertragen einer Datenmenge von einer Netzeinrichtung (X; Y) über zumindest eine Netzstation (BS1; BS2) von oder zu einer mobilen Station (MS; MT), die vor einem Verbindungsabbau nur über eine begrenzte Sendezeit über eine erste Verbindung (V1) mit der Netzstation (BS1) kommunizieren kann.

Um auch größere Datenmengen übertragen zu können, für welche die erforderliche Sendezeit innerhalb einer Funkzelle (Z1) länger als die dortige Aufenthaltszeit ist, wird vorgeschlagen, dass die Datenmenge in Teil-Datenmengen aufgeteilt wird und dass in der begrenzten Sendezeit zumindest eine der Teil-Datenmengen vollständig übertragen wird und weitere Datenmengen nach erneutem Aufbau einer Verbindung (V2) in einer späteren Sendezeit in einer anderen räumlich getrennten Funkzelle (Z2) übertragen werden.

Vorteilhafterweise erfolgt die Übertragung der Datenmenge nur, wenn die Datenmenge in der Summe der begrenzten zukünftigen Sendezeiten bzw. Funkzellen vollständig übertragen werden kann.

## Beschreibung

Verfahren und Kommunikationsvorrichtung zum Übertragen einer Datenmenge bei begrenzt möglicher Übertragungsdauer in einem Funk-Kommunikationssystem

Die Erfindung bezieht sich auf ein Verfahren zum Übertragen einer Datenmenge bei begrenzt möglicher Übertragungsdauer in einem Kommunikationssystem mit den oberbegrifflichen Merkmalen des Patentanspruchs 1 bzw. eine Kommunikationsvorrichtung mit Einrichtungen zum Durchführen eines solchen Verfahrens.

Bei digitalen Funk-Kommunikationssystemen, beispielsweise den Mobilfunksystemen GSM (Global System for Mobile Communications) oder UMTS (Universal Mobile Telecommunications System), werden Informationen wie beispielsweise Sprache, Bildinformation oder andere Daten mit Hilfe von elektromagnetischen Wellen über Funkschnittstellen übertragen. Die Funkschnittstellen dienen jeweils als eine Verbindung zwischen einer Basisstation und einer Vielzahl von Teilnehmerstationen, wobei die Teilnehmerstationen beispielsweise Mobilstationen oder ortsfeste Funkstationen sein können.

Bei Funksystemen mit hoher Datenrate wie z. B. gemäß dem Hiperlan/2-Standard oder gemäß IEEE 802.11 ist aufgrund der geringen Reichweite eine 100%ige Flächenabdeckung meist nicht möglich. Die Übertragung von Daten muss daher beendet sein, bevor ein mobiler Teilnehmer mit seiner Teilnehmerstation den Empfangs-/Sendebereich des hochratigen Funksystems verläßt.

Wenn eine Teilnehmerstation den Bereich einer Funkzelle verläßt wird in den heutigen Funkzugangsnetzen bei sich überlappenden Funkzellen eine Übergabe (Handover) durchgeführt. Bei Lücken zwischen den einzelnen Funkzellen muss die Funkverbindung unterbrochen und in der neuen Funkzelle vollständig neu aufgebaut werden (Re-Establishment oder Call-Set-Up). Nach dem Neuaufbau muss ein hinsichtlich Zeit und Ressourcen aufwendiger Abgleich erfolgen, bei dem der Daten sendenden Station mitgeteilt wird, welche Daten empfangen wurden bzw. noch zu übertragen sind.

Im Bereich der Übertragung von Daten, die aus dem Internet abgerufen werden, wird derzeit ein Verfahren diskutiert, bei dem eine Teilnehmerstation, die sich schnell durch verschiedene, nicht zusammenhängende Funkzellen bewegt, in einer ersten Zelle Daten aus dem Internet anfordert. In einem weiteren Schritten werden die angeforderten Daten jeweils den Sendeeinrichtungen der Funkzellen zur Übertragung übermittelt, durch die sich die Teilnehmerstation momentan bzw. nach einer Verbindungsunterbrechung als nächstes bewegt. Die Lieferung der Daten soll dabei gemäß dem Internet-Protokoll (IP) erfolgen.

Die Aufgabe der Erfindung besteht darin, ein Verfahren bzw. eine Kommunikationsvorrichtung zum Übertragen einer Datenmenge bei begrenzt möglicher Übertragungsdauer vor einem Verbindungsabbruch in einem Funk-Kommunikationssystem vorzuschlagen.

Diese Aufgabe wird durch das Verfahren mit den Merkmalen des Patentanspruchs 1 bzw. die Kommunikationsvorrichtung mit den Merkmalen des Patentanspruchs 13 gelöst. Vorteilhafte Verwendungen des Verfahrens und der Kommunikationsvorrichtung sind Gegenstand der Patentansprüche 14 und 15.

Vorteilhafte Ausgestaltungen sind Gegenstand von abhängigen Ansprüchen.

Die voraussichtliche Dauer der begrenzten Sendezeit zu bestimmen, ermöglicht Datenmengen mittels des Verfahrens in kleinere Datenmengen aufzuteilen und zu verschiedenen Zeiten über räumlich getrennte, disjunkte Funkzellen von bzw. zu einer mobilen Station zu übertragen. Wenn die Aufenthaltszeit der mobilen Station in einer ersten Funkzelle nicht ausreicht, um die gesamte Datenmenge innerhalb dieser Funkzelle zu übertragen, können die restlichen Daten somit ohne Mehrfach-Versendungen gleicher Daten mittels des Verfahrens auch in einer disjunkten Funkzelle übertragen werden.

Die voraussichtliche Dauer der begrenzten Sendezeit zu bestimmen, ermöglicht gemäß einem auch eigenständig vorteilhaften Aspekt die Übertragung der Datenmenge nur zu beginnen, wenn die Datenmenge in der begrenzten Sendezeit vollständig übertragen werden kann. Dadurch werden Systemressourcen geschont und Mehrfachübertragungen der selben Daten vermieden.

Die restliche Teil-Datenmenge zusammen mit Informationen über diese Daten, Zwischen-Netzstationen und/oder Absender und/oder Empfänger der Datenmenge oder restlichen Teil-Datenmenge an Netzstationen mit späteren Verbindungen weiterzuleiten ermöglicht eine einfache Verwaltung eines solchen Verfahrens zum Übertragen von Teil-Datenmengen mittels anderer Basisstationen zu späteren Zeitpunkten an räumlich entfernten Orten.

Die begrenzte Sendezeit wird zweckmäßig aus zumindest zwei Teil-Sendezeiten zusammengesetzt, die Sendebereichen verschiedener Netzstationen zugeordnet werden.

Von der Station oder einer Netzeinrichtung die Sendebereiche mit der nächsten sicheren oder wahrscheinlichen Möglichkeit zum Aufbau einer Verbindung zum Übertragen von Daten mitgeteilt, bestimmt oder geschätzt zu bekommen, ermöglicht eine Abschätzung der dortigen verfügbaren Aufenthalts- und Sendezeiten.

Die voraussichtliche Übertragungsdauer für die noch zu übertragende Teil-Datenmenge und/oder die voraussichtliche Dauer der verbleibenden begrenzten Sendezeit regelmäßig oder aufgrund vorbestimmter Ereignisse zu aktualisieren, ermöglicht eine Anpassung an sich ändernde Bedingungen. So ändern sich bei in Kraftfahrzeugen mitbewegten mobilen Stationen deren Geschwindigkeiten bereits im Bereich einer einzigen Funkzelle, wenn diese eine Stadt und eine in diese hineinführende Autobahn überdeckt sehr stark, so dass Anpassungen der ursprünglichen Berechnungen für die Durchführung des Verfahrens notwendig werden können.

Die voraussichtliche Übertragungsdauer für die noch zu übertragende Teil-Datenmenge und/oder die voraussichtliche Dauer der verbleibenden begrenzten Sendezeit mittels aktueller, ermittelter und/oder vorgegebener Daten und/oder Bewegungs- und Positionsdaten zu bestimmen oder zu schätzen liefert zuverlässigere Daten als bei der Verwendung rein statistischer Parameter. Dies gilt insbesondere auch für die Bestimmung der voraussichtlichen Übertragungsdauer und/oder die voraussichtliche Sendezeit mittels bekannter oder übermittelter Daten über nächste mögliche Sendebereiche.

Die Verwendung von Prioritätsdaten kann einerseits verwendet werden, um einen Dienst zur Übertragung großer Datenmengen hoch zu bewerten und bevorzugt Kapazitäten zuzuweisen. Andererseits kann aber auch eine Herabstufung vorgenommen werden, um z.B. Echtzeit-Dienste gegenüber Datendiensten zu bevorzugen. Insbesondere Datendienste mit der Möglichkeit, Teil-Datenmengen in einer disjunkten Funkzelle oder zu einem späteren Zeitpunkt nach dem Aus- und erneuten Einbuchen übertragen zu lassen, können hinsichtlich der Priorität gegenüber herkömmlichen Datendiensten, bei denen eine vollständige Datenübertragung zwingend erforderlich ist, herabgestuft werden.

Ein Grundgedanke des Verfahrens beinhaltet in vorteilhafter Weise die Fortführung der Übertragung der "restlichen" Datenanteile einer aufgeteilten Datenmenge über die nächsten Netzstationen bzw. Zugriffspunkte. Ein Spezialfall wäre, jedoch ohne einen erneuten Verbindungsaufbau, der Handover derzeit bekannter Funksysteme, wenn sich benachbarte Funkzellen überlappen. Das Verfahren stellt eine Erweiterung des klassischen Handover-Ansatzes auf nicht benachbarte Funkzellen dar.

Weiterhin dient das Verfahren zur Optimierung der Kapazität einer Funkzelle. Ferner kann die Teilnehmer-/Dienstedichte optimiert werden. Beliebige Datenvolumen können unabhängig von der aktuellen Kapazität einer Zelle und der Verweildauer übertragen werden. Optimiert werden kann das Verfahren u.a. durch eine adaptive Anpassung an unterschiedliche Topologien, wobei auch eine Anpassung an wechselnde Bewegungswahrscheinlichkeiten der mobilen Teilnehmer möglich ist.

Das hier beschriebene Verfahren erlaubt somit die Datenübertragung sofort nach Eintritt in die nächste, nicht unmittelbar an die verlassene Funkzelle angrenzende Funkzelle, fortzuführen. Ergänzend erlaubt das Verfahren die flexible Handhabung von Diensten unterschiedlicher Datenrate mit dem Ziel, die Teilnehmer-/Dienstedichte im Bereich einer Funkzelle zu erhöhen. Zudem vermeidet das Verfahren die sinnlose Übertragung von Daten und Dateien wenn der Teilnehmer die Zelle verläßt, bevor die Datenmenge vollständig übertragen werden kann.

Die Daten von einer der ortsfesten Stationen zu der mobilen Station zu übertragen und dort zwischenzuspeichern und die zwischengespeicherten Daten später nach dem Erreichen eines Kommunikationsbereichs, der einer zweiten der ortsfesten Stationen zugeordnet ist, dieser zweiten ortsfesten Station von der mobilen Station zu übertragen, ermöglicht das Einrichten von Kurierdiensten für Daten, die zwischen disjunkten Zellen zu übertragen sind. In eigenständiger erfinderischer Ausgestaltung kann ein solcher Kurierdienst für Daten auch ohne zwingende Abschätzung bzw. Bestimmung von verfügbaren begrenzten Sendezeiten oder übertragbaren Datenmengen durchgeführt werden.

Ein Ausführungsbeispiel wird nachfolgend anhand der Zeichnung näher erläutert. Es zeigen:
- Fig. 1: eine einfache Form eines Funk-Kommunikationsnetzes mit zeitlich versetzten Kommunikationsverbindungen zwischen einer Teilnehmerstation und zwei Netzstationen,
- Fig. 2: ein Ablaufdiagramm eines Verfahrens zum Übertragen einer Datenmenge in einem solchen System und
- Fig. 3: ein anderes beispielhaftes Szenario.

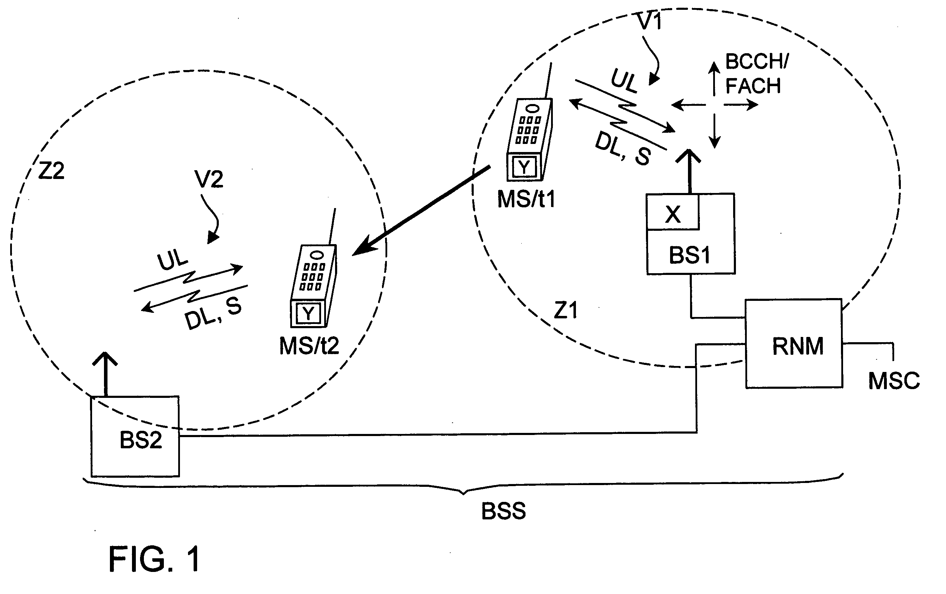

Wie aus Fig. 1 ersichtlich, ist das nachfolgend beschriebene Verfahren insbesondere in einem Kommunikationssystem, z.B. einem Mobilfunksystem gemäß den GSM- oder UMTS-Standard anwendbar. Das beispielhaft dargestellte Mobilfunksystem weist eine Vielzahl von Netzelementen auf, insbesondere netzseitig Mobilvermittlungsstellen MSC, Einrichtungen RNM zum Zuteilen von funktechnischen Ressourcen sowie Basisstationen BS1, BS2 als Sende-/Empfangseinrichtungen und teilnehmerseitig in der untersten Hierarchieebene als Sende-/Empfangseinrichtungen Teilnehmerstationen MS.

Die Mobilvermittlungsstellen MSC, die untereinander vernetzt sind und von denen hier nur eine dargestellt ist, stellen den Zugang zu einem Festnetz oder einem anderen Funknetz her. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS1, BS2. Eine solche Basisstation BS1, BS2 kann über eine Funkschnittstelle V1 bzw. V2 eine Verbindung zu Teilnehmerstationen, z.B. mobilen Stationen MS oder anderweitigen mobilen und stationären Endgeräten aufbauen. Durch jede Basisstation BS1, BS2 wird zumindest eine Funkzelle Z1 bzw. Z2 gebildet. Übertragungen in Aufwärtsrichtung UL (Uplink) erfolgen von der Basisstation BS1 bzw. BS2 zur mobilen Station MS, Übertragungen in Abwärtsrichtung DL (Down Link) in umgekehrter Richtung. Weiterhin ist ein Organisationskanal (FACH oder BCCH: Broadcast Control CHannel) dargestellt, der zur Übertragung von Nutz- und Signalisierungsinformationen mit einer definierten Sendeleistung von jeder der Basisstationen BS1, BS2 für alle mobilen Stationen MS im Bereich der Funkzelle Z1 bzw. Z2 bereitgestellt wird.

Gemäß einem bevorzugten Ausführungsbeispiel weisen die Teilnehmerstation MS und/oder eine Netzstation, wie die Basisstation BS, Speicher und Steuereinrichtungen Y bzw. X auf, in denen Daten D, Parameter oder Rechenvorschriften für deren Verwaltung und Steuerung hinterlegt sind.

In Fig. 1 ist die Netzsituation zu zwei Zeitpunkten t1 bzw. t2 dargestellt. Zum ersten Zeitpunkt t1 befindet sich die Teilnehmerstation MS im Bereich der ersten Basisstation BS1 bzw. deren Funkzelle Z1. Über die Verbindung V1 soll eine bestimmte Datenmenge D aus dem Netz zur Teilnehmerstation MS übertragen werden.

Die erforderliche Übertragungsdauer tD zur vollständigen Übertragung der Datenmenge D zur Teilnehmerstation MS in der ersten Funkzelle Z1 ist jedoch kürzer als die Verweildauer bzw. begrenzte Sendezeit tS1 der Teilnehmerstation MS in dieser Funkzelle Z1.

Die Teilnehmerstation MS bewegt sich nach Ablauf der Verweildauer tS1 aus der ersten Funkzelle Z1 in Richtung der zweiten Funkzelle Z2. Da sich die beiden Funkzellen Z1 und Z2 nicht überlappen, wird die Verbindung vom Netz zur Teilnehmerstation MS vollständig abgebrochen. Nach dem Eintreffen der Teilnehmerstation MS in der zweiten Funkzelle Z2 wird über die Verbindung V2 eine erneute Übertragungsverbindung zwischen Netz und Teilnehmerstation MS aufgebaut. Die Teilnehmerstation MS verweilt in dieser zweiten Funkzelle Z2 über eine zweite Verweildauer bzw. begrenzte Sendezeit tS2.

Bei dem nachfolgend beschriebenen Verfahren wird die Datenübertragung direkt nach dem Aufbau der Verbindung V2 wieder aufgenommen. Dabei wird in vorteilhafter Weise ohne einen Abgleich der bereits übertragenen Datenanteile direkt mit der Übertragung der noch nicht übertragenen restlichen Datenanteile Di begonnen.

Das Verfahren basiert zweckmäßigerweise auf einer intelligenten Vorhersage der erforderlichen Gesamt-Übertragungsdauer tD der angeforderten Datenmenge D unter Einbeziehung der voraussichtlichen Verweildauer tS1, tS2 in den Funkzellen Z1 und/oder Z2. Außerdem basiert das Verfahren auf der Vorhersage wo und wann sich die Teilnehmerstation MS nach dem Verlassen des aktuellen Funkbereichs bzw. der aktuellen Funkzelle Z1 befindet.

Ein weiterer zweckmäßiger Aspekt des Verfahrens beinhaltet die Initialisierung einer fortgesetzten Datenübertragung (concatenated data transfer) unter Einbeziehung weiterer Zugriffspunkte (AP: Access Points), wie vorliegend der Basisstationen BS2, und eventuell eines vertikalen Handovers zu anderen Funksystemen wie z. B. von GSM zu UMTS.

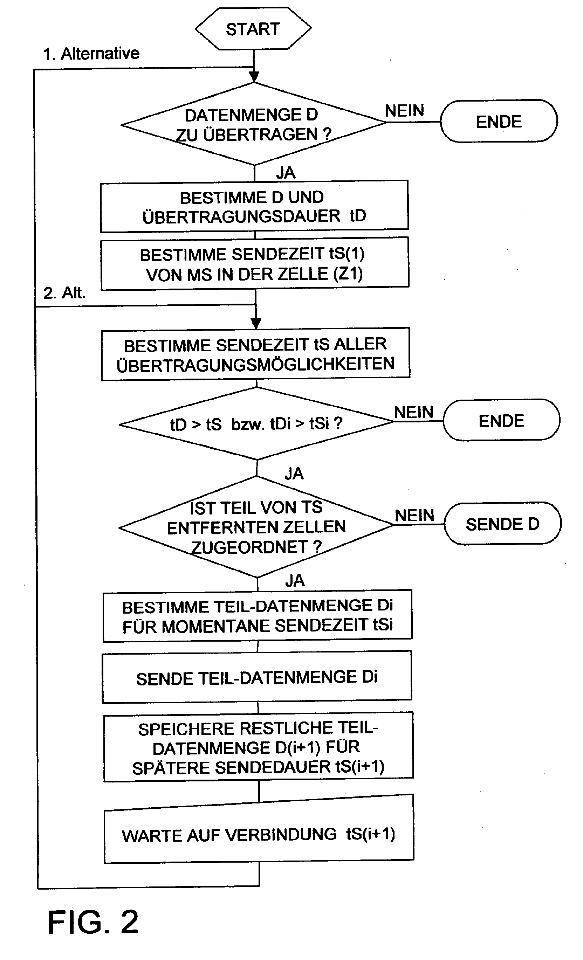

Nachfolgend werden anhand von drei Szenarien bevorzugte Funktionen des auch in Fig. 2 skizzierten Verfahrens beschrieben.

Das erste Szenario stellt eine isolierte Funkzelle Z dar, nach deren Verlassen die Teilnehmerstation MS keine Aussicht auf das Erreichen derselben oder einer anderen Funkzelle innerhalb einer maximal tolerierbaren Zeit hat. Die Übertragung restlicher Datenmengen ist daher innerhalb der tolerierbaren Zeit nicht möglich.

In der isolierten Funkzelle Z wird mit der zur Verfügung stehenden Datenrate die erforderlichen Sendedauer tD für die zu übertragende Datenmenge D abgeschätzt. Außerdem wird die zu erwartende Verweildauer bzw. begrenzte Sendezeit tS in der Funkzelle Z abgeschätzt. Danach wird abgeschätzt, ob die zu übertragende Datenmenge D in der verfügbaren Sendezeit tS übertragen werden kann, d.h. ob Dt > St ist. Ist dies nicht der Fall, wird die Übertragung automatisch storniert und damit die Luftschnittstelle entlastet.

Werden bereits Daten der Datenmenge D übertragen, so kann eine solche Übertragung zweckmäßigerweise auch nach einer aktualisierten verkürzten Sendezeitabschätzung tS abgebrochen werden. Vorteilhafterweise wird dazu abhängig von der bereits übertragenen Teil-Datenmenge Di eine Schwelle zur Vermeidung eines unter Umständen nicht erforderlichen Abbruchs aufgrund zeitlicher Schwankungen der Sendebedingungen gesetzt. Dadurch wird eine Übertragung bei einer bereits großen übertragenen Teil-Datenmenge Di nur dann abgebrochen, wenn die Wahrscheinlichkeit entsprechend groß ist, das nach der erfolgten Aktualisierung das Verhältnis der noch verfügbaren Sendezeit tSi zu der noch benötigten Sendezeit tDi voraussichtlich tatsächlich nicht ausreicht.

Beim zweiten Szenario, bei dem sich zwei oder mehr Zellen Z direkt berühren oder überschneiden, wird beim Wechsel von einer Zelle in die benachbarte Zelle zweckmäßigerweise eine für sich bekannte Übergabe (Handover) durchgeführt.

Das dritte Szenario betrifft Funkzellen Z1, Z2 mit vorteilhafterweise gleicher Technologie, wobei sich die Funkzellen Z1 und Z2 nicht überlappen (Disjunkte Funkzellen). Sind die Funkzellen des gleichen Funksystems disjunkt, so kann kein Handover innerhalb dieses durchgeführt werden. Sind mehrere Funkzellen Z1, Z2 derart deutlich voneinander getrennt, so kann kein üblicher Handover durchgeführt werden. Ein Verbindungsabbau und ein erneuter Verbindungsaufbau sind erforderlich.

Nachfolgend wird angenommen, dass kann die momentane erste Basisstation BS1 die gesamte Datenmenge trotz höchst möglicher Datenrate nicht übertragen kann, d.h. es gilt tD > tS. Jedoch soll die nach entsprechenden Kriterien festlegbare ausreichende Wahrscheinlichkeit bestehen, dass sich die Teilnehmerstation MS zu einem tolerierbar späteren Zeitpunkt in diese Funkzelle Z1 oder in eine andere Funkzelle Z2 begibt. Dann wird bestimmt, ob die in all diesen Funkzellen Z1, Z2,... dieser und insgesamt verfügbare Sendezeit tS (tS = tS1 + tS2 +.tSi...) ausreicht, um die gesamte Datenmenge D zu übertragen, d.h. ob gilt tD > tS(Gesamt).

Falls ja, so wird die Datenmenge D in Teil-Datenmengen Di, hier Di und D(i+1) aufgeteilt. Dabei entspricht die erste Teil-Datenmenge Di der Datenmenge die in der ersten begrenzten Sendezeit tSi in der momentanen Funkzelle Z1 voraussichtlich übertragen werden kann, d.h. der Bedingung tDi ≤ tSi genügt. Diese erste Teil-Datenmenge Di wird daraufhin im Uplink oder Downlink über die erste Funkschnittstelle V1 übertragen.

Zumindest die restliche Teil-Datenmenge D(i+1) wird in der die Daten bereitstellenden Speichereinrichtung X bzw. Y oder einer entsprechend ausgebildeten Netzeinrichtung gespeichert. Mit der Übertragung dieser restlichen Teil-Datenmenge D(i+1) wird gewartet, bis eine neue geeignete Verbindung mit einer ausreichenden Sendezeit tS(i+1) zu deren Übertragung aufgebaut wurde.

Vorteilhafterweise wird in regelmäßigen Abständen oder nach Veränderung der Bedingungen, die für die Abschätzung der erforderlichen Übertragungsdauer tD oder der verfügbaren Sendezeit tS zugrunde lagen/liegen, eine erneute Abschätzung aller Parameter vorgenommen. Dadurch ist insbesondere eine Neueinteilung der Teil-Datenmengen Di, D(i+1),... entsprechend neu bestimmter Sendezeiten tSi, tS(i+1),... möglich.

Bei diesem dritten Szenario leitet die erste Basisstation BS1 der aktuellen ersten Funkzelle Z1 somit eine fortzusetzende bzw. verkettete Datenübertragung ("concatenated data transfer") ein und verweist die Teilnehmerstation MS nach Ablauf der verfügbaren begrenzten ersten Sendezeit tSi an die nächste Basisstation BS2. Nach dem Eintritt in den Erfassungsbereich einer weiteren Basisstation BS2 kann die Datenübertragung direkt nahtlos fortgeführt werden. Der Teilnehmer erhält somit über die erste Verbindung V1 nicht seine maximal angeforderte Datenrate, um die Übertragung der tatsächlich übertragbaren Daten Di innerhalb der Verweildauer innerhalb der Funkzelle Z1 zu garantieren.

Insbesondere kann bei einem solchen Verfahren auch die maximal mögliche bzw. zulässige Datenrate herabgesetzt werden, um andere Verbindungen auf der Funkschnittstelle nicht zu behindern. Die aktuell ausgehandelte Datenrate zwischen Teilnehmerstation MS und Basisstation BS1 bzw. BS2 wird vorteilhafterweise aufgrund der aktuellen oder erwarteten Belastung der Funkzelle so eingestellt, dass die Teilnehmer / Dienstedichte maximiert wird. Um dies zu erreichen, können die Teilnehmerstation MS, die Basisstation BS1 und/oder eine Netzsteuereinrichtung eine verkettete Datenübertragung einleiten.

Andere Teilnehmerstationen/Dienste können aber optional auch mit einer niedrigen Priorität eingestuft werden, wenn eine angeforderte Datenübertragung zwischen der Teilnehmerstation MS und den absehbar verfügbaren Basisstationen BS nicht möglich wäre.

Aufgrund einer hohen Belastung in der aktuellen Funkzelle Z1 kann die Teilnehmerstation MS mangels Kapazität für die Übertragung der Datenmenge aber auch direkt zur Übertragung der gewünschten Daten auf andere, weniger belastete Zellen verwiesen werden. Der Verweis bzw. die Datenübertragung wird durch die Basisstation BS1 der aktuellen Funkzelle Z1 initiiert. Auch dafür kann zur Reduzierung des Verwaltungsaufwandes eine verkettete Datenübertragung eingeleitet werden, obwohl die erste Teil-Datenmenge Di tatsächlich eine Nullmenge ist.

Nachfolgend werden einzelne Aspekte einer solchen fortzusetzenden Datenübertragung näher erläutert.

Zwei Informationen sind für die verkettete Datenübertragung von hervorzuhebender Bedeutung, nämlich einerseits die potentielle Verweildauer bzw. maximal begrenzt verfügbare Sendezeit tS und andererseits eine Schätzung oder Ermittlung der Folge-Funkzellen, in denen sich die betreffende Teilnehmerstation voraussichtlich aufhalten wird.

Die potentielle Verweildauer tSi innerhalb der aktuellen Funkzelle Zi (i = 1,2,3,...) kann z.B. auf der Schätzung der Geschwindigkeit der Teilnehmerstation MS aus Kanalschätzungen von deren Empfänger oder von netzseitigen Empfängern basieren. Möglich ist auch die alleinige oder zusätzliche Verwendung von Daten eines GPS-Empfängers (GPS: Global Positioning System), der in der Teilnehmerstation MS integriert oder mit dieser verbunden ist. Weiterhin können die derart bestimmte maximale begrenzte Sendezeit tSi verlängernde Einflüsse berücksichtigt werden, z.B. eine Schätzung der Verweildauer aufgrund von Ampelphasen oder Ortsdurchfahrten eines Kraftfahrzeugs mit reduzierter Geschwindigkeit. Für letzteres ist insbesondere eine Kopplung mit Navigationssystemen eines Kraftfahrzeugs vorteilhaft, zumal derzeitige Navigationssysteme zumeist mit einem GPS-Empfänger ausgestattet sind. Die Kopplung kann z.B. über eine Kabel- oder Infrarot-Schnittstelle zwischen Navigationssystem und Teilnehmerstation MS erfolgen. Berücksichtigt werden können auch Gewohnheiten des Besitzers der Teilnehmerstation MS. Einprogrammiert oder automatisch durch das System selbst bestimmt werden kann beispielsweise eine täglich gewählte Fahrtroute zwischen Wohnung und Arbeitsstätte.

Die Schätzung der Folge-Funkzelle (Z2) bzw. Folge-Funkzellen kann vorteilhafterweise auf Basis des a priori Wissens über die Topologie der Umgebung erfolgen. An einer Straßenkreuzung gibt es z.B. nur eine bestimmte Anzahl von Möglichkeiten, die durch Einbahnstraßen usw. noch weiter eingeschränkt werden. Verwendet werden können aber auch Informationen über die geplante oder momentan zurückgelegte Route die durch ein Navigationssystem übermittelt werden können. Diese Schätzung der Folge-Funkzelle(n) Z2 ist insbesondere zweckmäßig, um die Verweildauer tS(i+1) darin abschätzen zu können, so dass die letztendlich verfügbare Gesamt-Sendezeit tS abschätzbar wird.

Stellen die Teilnehmerstation MS, die Basisstation BS1 oder eine entsprechend eingerichtete Netzeinrichtung fest, dass die gesamte Datenmenge D nicht während der Verweildauer tS in der momentanen Funkzelle Z1 übertragen werden kann, so übermittelt die Basisstation BS1 an die Basisstation BS2 der potentiell "nächsten" Funkzelle bzw. Folge-Funkzelle die Daten, die für eine kontinuierliche Fortführung der Datenübertragung nötig sind. Dadurch kann die Übertragung sofort fortgesetzt werden, wenn die Teilnehmerstation MS die Folge-Funkzelle Z2 erreicht hat.

Für Fälle, in denen die Bestimmung oder Abschätzung der Folge-Funkzelle Z2 falsch war oder aber auch bei einer zu großen Anzahl möglicher Folge-Funkzellen kann auch vorgesehen werden, dass die Übertragung der erforderlichen Daten zu der neuen Aufenthalts-Basisstation BS2 erst nach dem dortigen Einbuchen der Teilnehmerstation MS erfolgt.

Bei der Übergabe von einer ersten Basisstation BS1 zu einer anderen, zweiten Basisstation BS2 kann durch die vorherige zusammen mit der noch zu übertragenden restlichen Teil-Datenmenge Di ein Datensatz mit übergeben werden, in dem zusätzliche Informationen enthalten sind. Solche zusätzlichen Informationen können z.B. sein die voraussichtliche Eintrittszeit der Teilnehmerstation MS im Bereich der anderen Basisstation BS2, die dortige abgeschätzte Verweildauer tS(i+1), die voraussichtliche Fahrroute des Teilnehmers bzw. der Teilnehmerstation MS, die Identität des Teilnehmers, die Anzahl der Datenpakete und/oder die erforderliche Dienstegüte (QoS: Quality of Service).

Der Datensatz beschreibt somit vorteilhafterweise ein ganzes Dienste- bzw. Service-Profil das alle erforderlichen und nützlichen Informationen enthält. Dieser Datensatz wird vom System, insbesondere der jeweils momentan zuständigen Basisstation BS entsprechend aktualisiert und wiederum zur nächsten Basisstation BS übertragen, um diese informieren, damit die dort nötigen Schritte eingeleitet werden können.

In einer Zelle mit hoher Verkehrslast besteht vorteilhafterweise die Möglichkeit, dass mehrere Teilnehmerstationen MS den Dienst zur verketteten Datenübertragung verwenden wollen. Zur Regelung bei begrenzter Kapazität können die Teilnehmerstationen über Prioritätslisten verwaltet werden. Die vergebenen Prioritäten könnten automatisch als Funktion verschiedener Parameter, wie z. B. der Verweildauer in einer Funkzelle oder einer Kombination von QoS, verwendetem Dienst und Geschwindigkeit innerhalb der Funkzelle bestimmt werden.

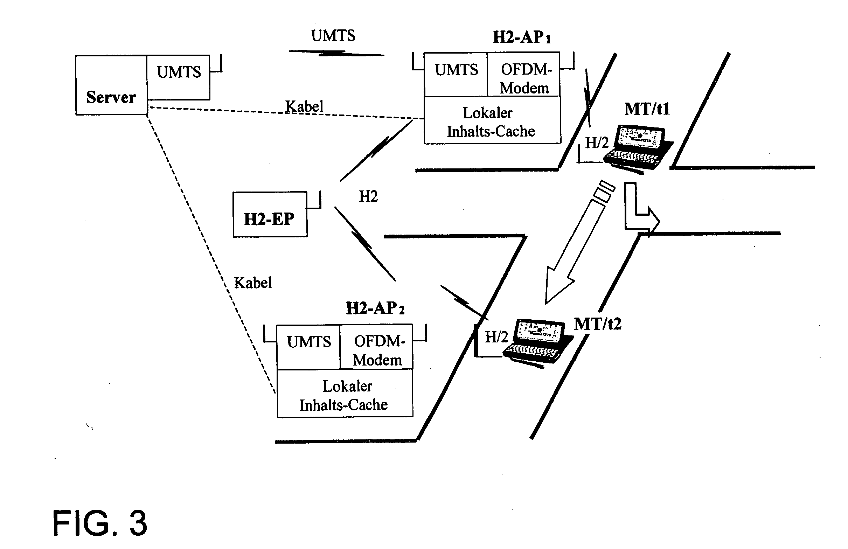

Noch zu übertragende Teil-Datenmengen Di und Informationen zur Verwaltung und Steuerung eines solchen Verfahrens können, wie auch aus Fig. 3 ersichtlich, über einen Kanal des eigenen Funksystems, vorteilhafterweise mit Reichweitenerhöhung durch Erweiterungspunkte EP (Extension Point) oder Richtantennen, über ein flächendeckendes Funksystem wie z. B. UMTS/GSM oder leitungsgebunden übertragen werden.

Das Verfahren kann dahingehend erweitert werden, dass auch die Teilnehmerstation MS eines in eine Funkzelle Z2 einfahrenden Fahrzeugs Informationen an die Basisstation BS2 der betretenen Funkzelle Z2 übergibt. Die Teilnehmerstation MS versieht in diesem Fall Daten-Kurierdienste zwischen den Basisstationen BS1, BS2, die auf ihrem Weg liegen.

Die Topologie des Netzes, d. h. hier der Standort Basisstationen BS1, BS2 zueinander, kann entweder über eine zentrale Verwaltung, z.B. den Netzbetreiber, in die Basisstationen BS1, BS2 geladen werden, oder selbständig erlernt und abgeglichen werden. Hierzu speichert und/oder übergibt die Teilnehmerstation MS der Basisstation BS2 über die zuvor verlassene Funkzelle Z1 Informationen, z.B. Basisstations-Nummer, GPS-Position usw.

Durch eventuell von der vorherigen Basisstation BS1 übergebene bzw. durch die Teilnehmerstation MS beim letzten Kontakt selbst gesetzten Zeitmarken können die Fahrzeuggeschwindigkeit und indirekt der Verkehrsfluß bestimmt werden. Durch die Verknüpfung von real bewegter Teilnehmerstation MS und den Daten, die mit den Basisstationen BS1, BS2 ausgetauscht werden, können Profile über die Verkehrssituation erstellt werden. Je nach Jahres- bzw. Tageszeit ergeben sich andere Bewertungsmuster bzw. Verkehrsflüsse der Teilnehmerstation MS, aus denen über statistische Verfahren Eintreffwahrscheinlichkeiten ermittelt werden können. Die Eintreffwahrscheinlichkeiten bzw. die statistischen Daten über die Verkehrsflüsse können bei entsprechender Auslegung des Funknetzes auch an die Steuerinstanzen übermittelt werden, die dann die Datenflüsse (Routing) entsprechend konditionieren. Es ist beispielsweise sehr wahrscheinlich, dass der Feierabendverkehr aus der Stadt herausfließt und dabei bevorzugt bestimmte Straßen belegt und Seitenstraßen meidet. Insbesondere kann die Belastung eines "Hot-Spots" auf andere Zellen "verschmiert" werden.

Gemäß der in Fig. 3 dargestellten Ausführungsform bewegt sich ein Teilnehmer mit seinem Laptop als Teilnehmerstation bzw. mobiles Terminal MT in seinem Kraftfahrzeug entlang einer viel befahrenen Straße. In der Nähe einer Ampel befindet sich das mobile Terminal MT im Bereich einer Hiperlan2-Funkzelle mit einem Zugriffspunkt H2-AP1. Der Zugriffspunkt H2-AP1 nimmt Kontakt mit dem mobilen Terminal MT auf und will die Voranzeigen aktueller Kinofilme entsprechend einem geschlossenen Servicevertrag auf das mobile Terminal MT herunterladen. Beim Erreichen der Funkzelle ist die Ampel bereits einige Sekunden auf Rot. Aufgrund der abgeschätzten, restlichen Verweildauer an der Ampel bzw. in der Funkzelle und der zur Verfügung stehenden Datenrate, ermittelt der Zugriffspunkt H2-AP1 die Datenmenge, die innerhalb seines Funkbereichs an das mobile Terminal MT übertragen werden kann. Ebenso erkennt der Zugriffspunkt H2-AP1 aufgrund der Straßenlage drei benachbarte Funkzellen an den nächsten Ampeln, die von dem mobilen Terminal MT angefahren werden können. Durch die Information des Navigationssystems im Kraftfahrzeug des Teilnehmers erfährt der Zugriffspunkt H2-AP1 durch eine entsprechende Mitteilung die Route, auf der sich das mobile Terminal MT bewegen wird. Der Zugriffspunkt H2-AP1 benachrichtigt, z. B. über eine stark gerichtete Hiperlan2-Funkverbindung, die zusätzlich noch durch einen Extension Point H2-EP verlängert wird, den vom Teilnehmer als nächstes angefahrenen Zugriffspunkt H2-AP2. Trifft der Teilnehmer mit dem mobilen Terminal MT im Erfassungsbereichs des Zugriffspunkt H2-AP2 ein, wird die Datenübertragung fortgesetzt. Hier wiederholt sich für verbleibende Restdaten die weitere Prozedur analog zu Zugriffspunkt H2-AP1.

Theoretisch könnte der Extension Point EP die Versorgung des mobilen Terminals MT über die Reichweite des Zugriffspunkts H2-AP1 hinaus aufrechterhalten. Doch würde dies die Kapazität der Funkzelle des Zugriffspunkts H2-AP1 reduzieren. Im vorstehenden Beispiel braucht daher über den Extension Point EP nur eine schmalbandige Signalisierung durchgeführt zu werden.

Ein Vorteil des beschriebenen EP-Szenarios besteht auch darin, dass keinerlei Gebühren für die Nutzung eines weiteren Dienstes, wie z. B. UMTS, anfallen.

## Patentansprüche

1. Verfahren zum Übertragen einer Datenmenge (D) von einer Netzeinrichtung (X; Y) über zumindest eine Netzstation (BS1; BS2) von oder zu einer Station (MS; MT), wobei nur eine begrenzte Sendezeit (tS; tSi, tS(i+1)) verfügbar ist,
**dadurch gekennzeichnet,**
- **dass** die voraussichtliche Übertragungsdauer (tD; tDi, tD(i+1)) für die zu übertragende Datenmenge (D; Di, D(i+1)) bestimmt oder geschätzt wird,
- **dass** die voraussichtliche Dauer der begrenzten Sendezeit (tS; tSi, tS(i+1)) bestimmt oder geschätzt wird,
- **dass** eine Entscheidung über die Behandlung der zu übertragenden Datenmenge (D; Di) abhängig davon erfolgt, ob die Datenmenge in der begrenzten Sendezeit (tS; tSi, tS(i+1)) vollständig übertragen werden kann.

2. Verfahren nach Anspruch 1, bei dem
- dann, wenn die erste oder eine Summe begrenzter Sendezeiten (tS; tSi, tS(i+1)) kleiner als die erforderliche Übertragungsdauer (tD; tDi, tD(i+1)) ist, die Datenmenge (D) derart in Teil-Datenmengen (Di, D(i+1)) aufgeteilt wird,
- dass in der bzw. den begrenzten Sendezeiten (tS; tSi, tS(i+1)) zumindest eine der Teil-Datenmengen (Di) vollständig übertragen wird und eine oder mehrere weitere Datenmengen (D(i+1)) nach erneutem Aufbau einer Verbindung (V2) in einer späteren Sendezeit (tS(i+1)) übertragen werden.

3. Verfahren nach Anspruch 2, bei dem
die restliche/restlichen Teil-Datenmengen (D(i+1)) zusammen mit Informationen über diese Daten, über Zwischen-Netzstationen (BS2) und/oder über Absender und/oder über Empfänger der Datenmenge (D) an Netzstationen (BS2) mit zeitlich späteren Verbindungen (V2) weitergeleitet werden.

4. Verfahren nach einem vorstehenden Anspruch, bei dem
- die Übertragung der Datenmenge (D; Di) nur erfolgt, wenn die Datenmenge in der begrenzten Sendezeit (tS; tSi, tS(i+1)) vollständig übertragen werden kann.

5. Verfahren nach einem vorstehenden Anspruch, bei dem
die begrenzte Sendezeit (tS) aus zumindest zwei Teil-Sendezeiten (tSi, tS(i+1)) zusammengesetzt wird.

6. Verfahren nach Anspruch 5, bei dem
die Teil-Sendezeiten (tSi, tS(i+1)) Sendebereichen (Z1, Z2) verschiedener Netzstationen (BS1, BS2) zugeordnet werden.

7. Verfahren nach einem vorstehenden Anspruch, bei dem
die Entscheidung unter Berücksichtigung einer Toleranz bei der Bestimmung bzw. Abschätzung der begrenzten Sendezeit (tS; tSi, tS(i+1)) und/oder der erforderlichen Übertragungsdauer (tD; tDi, tD(i+1)) erfolgt.

8. Verfahren nach einem vorstehenden Anspruch, bei dem
von der Station (MS; MT) oder einer Netzeinrichtung (BS1) der Sendebereich/die Sendebereiche (Z2) mit der nächsten sicheren oder wahrscheinlichen Möglichkeit zum Aufbau einer Verbindung (V2) zum Übertragen von Daten mitgeteilt, bestimmt oder geschätzt werden.

9. Verfahren nach einem vorstehenden Anspruch, bei dem
die voraussichtliche Übertragungsdauer (tD; tDi, tD(i+1)) für die noch zu übertragende Teil-Datenmenge (Di, D(i+1)) und/oder die voraussichtliche Dauer der verbleibenden begrenzten Sendezeit (tSi, tS(i+1)) regelmäßig oder aufgrund vorbestimmter Ereignisse aktualisiert wird.

10. Verfahren nach einem vorstehenden Anspruch, bei dem
die voraussichtliche Übertragungsdauer (tD; tDi, tD(i+1)) für die noch zu übertragende Teil-Datenmenge (Di, D(i+1)) und/oder die voraussichtliche Dauer der verbleibenden begrenzten Sendezeit (tSi, tS(i+1)) mittels aktueller, ermittelter und/oder vorgegebener Daten und/oder Bewegungs- und Positionsdaten bestimmt oder geschätzt werden.

11. Verfahren nach einem vorstehenden Anspruch, bei dem
die voraussichtliche Übertragungsdauer (tD; tDi, tD(i+1)) für die noch zu übertragende Teil-Datenmenge (Di, D(i+1)) und/oder die voraussichtliche Dauer der verbleibenden begrenzten Sendezeit (tSi, tS(i+1)) mittels bekannter und/oder übermittelter Daten über nächste mögliche Sendebereiche (Z2) bestimmt oder geschätzt werden.

12. Verfahren nach einem vorstehenden Anspruch, bei dem
die voraussichtliche Übertragungsdauer (tD; tDi, tD(i+1)) für die noch zu übertragende Teil-Datenmenge (Di, D(i+1)) und/oder die voraussichtliche Dauer der verbleibenden begrenzten Sendezeit (tSi, tS(i+1)) und/oder die Aufteilung der Datenmenge (D) in Teil-Datenmengen (Di, D(I+1)) unter Anwendung von Priorisierungdaten bestimmt oder geschätzt werden.

13. Kommunikationssystemvorrichtung für ein Kommunikationssystem mit zumindest einer Netzstation (BS1, BS2) zum Übertragen einer Datenmenge (D; Di, D(i+1)) von oder zu einer mobilen Station (MS; MT),
**gekennzeichnet durch**
- zumindest eine Bestimmungseinrichtung (X; Y) zum Bestimmen und/oder Abschätzen der voraussichtlich verfügbaren Sendezeiten (tS; tSi, tS(i+1)) mehrerer getrennter Verbindungen (V1, V2) und der voraussichtlich erforderlichen Übertragungsdauer (tD; tDi, tD(i+1)) für die Datenmenge (D) und
- eine Koordinierungseinrichtung (X; Y) zum Aufteilen der Datenmenge (D) in Teil-Datenmengen (Di, D(i+1)) und zum Koordinieren und/oder zum Zuweisen der Teil-Datenmengen (Di, D(i+1)) zu den verfügbaren Sendezeiten (tS; tSi, tS(i+1)).

14. Verwendung eines Verfahrens nach einem der Ansprüche 1 - 12 oder der Kommunikationsvorrichtung nach Anspruch 13 in mobilen Stationen (MS; MT) und netzseitigen Stationen (BS1, BS2) eines zellularen Funk-Kommunikationssystems (GSM; UMTS; Hiperlan2).

15. Verwendung eines Verfahrens nach einem der Ansprüche 1 - 12 oder der Kommunikationsvorrichtung nach Anspruch 13 oder 14 in mobilen Stationen (MS; MT) und ortsfesten Stationen (BS1, BS2) zum Übertragen von Daten (D; Di, D(i+1)), wobei
- die Daten von einer ersten der ortsfesten Stationen (BS1) zu der mobilen Station (MS; MT) übertragen und dort zwischengespeichert werden und
- die zwischengespeicherten Daten später nach dem Erreichen eines Kommunikationsbereichs (Z2), der einer zweiten der ortsfesten Stationen (BS2) zugeordnet ist, dieser zweiten ortsfesten Station (BS2) von der mobilen Station (MS; MT) übertragen werden.
